# EUROPEAN PATENT APPLICATION

(11) **EP 2 339 425 A1**
(43) Date of publication of application: **29.06.2011**
(21) Application number: 09180503.6
(22) Date of filing: 22.12.2009
(51) Int. Cl.: G06F 1/16, G06F 3/02

(54) **Customizable keyboard**

(71) Applicant: RESEARCH IN MOTION LIMITED, Waterloo, Ontario N2L 3W8 (CA)
(72) Inventor: Ladouceur, Norman Miner, Waterloo Ontario N2L 3W8 (CA); Griffin, Jason Tyler, Waterloo Ontario N2L 3W8 (CA); Michael, Mark, Waterloo Ontario N2L 3L3 (CA)
(74) Representative: Fennell, Gareth Charles

(57) **Abstract**

A customizable keyboard for a handheld electronic device is provided. The keys of the keyboard are rotatable, either individually or in groups, either under manual control of a user of the device or by means of one or more micro-motors or solenoids controlled by a microprocessor running software on the device. The keyboard may be integrated in the device or may be detachable therefrom.

## Description

### FIELD OF TECHNOLOGY

The present application relates to keyboards and in particular to keyboards for handheld electronic devices.

### BACKGROUND INFORMATION

Keyboards for handheld devices become more difficult to use accurately as the size of the devices decreases and, necessarily, the density of the keys increases. Keyboard configurations have been devised that attempt to mitigate the problem of accidentally pressing a key other than the one intended. But such configurations are typically not adaptable to users with different preferences or to varying uses of the device for which different configurations may be advantageous. Therefore, it is desirable to provide a keyboard that is easily customizable after manufacture.

### BRIEF DESCRIPTION OF THE DRAWINGS

Example embodiments will now be described, by way of example only, with reference to the attached Figures, wherein:

Figure 1 is a schematic diagram and block diagram of a mobile communication device;

Figures 2A and 2B are block diagrams of key arrangements of keyboards;

Figures 2C and 2D are block diagrams of example key arrangements of keyboards according to the disclosure;

Figures 3A to 3D are block diagrams of alternative key arrangements of keyboards according to the disclosure;

Figure 4A is a bottom plan view of a portion of a keyboard illustrating various exemplary apertures and exemplary complementary keys;

Figure 4B depicts one exemplary key of Figure 4A in a bottom plan view and two cross-sectional side views;

Figure 5A is a top plan view of a portion of a keyboard illustrating alternative exemplary apertures and complementary keys;

Figure 5B depicts one exemplary key of Figure 5A in a top plan view and two cross-sectional side views;

Figure 6A is a top plan view of a portion of a keyboard illustrating further alternative exemplary apertures and complementary keys;

Figure 6B depicts one exemplary key of Figure 6A in a top plan view and two cross-sectional side views;

Figure 7A is a bottom plan view of a portion of a keyboard illustrating still further alternative exemplary apertures and complementary keys;

Figure 7B depicts one exemplary key of Figure 7A in a top plan view and two cross-sectional side views;

Figures 8A, 8B, and 8C are cross-sectional side views of modifications of the keys of Figures 4B, 5B, and 5C, respectively;

Figure 9A is a bottom plan view of a portion of a keyboard illustrating exemplary apertures and complementary keys designed to limit the range of rotation of each key within its respective aperture;

Figure 9B depicts one exemplary key of Figure 9A in a bottom plan view and two cross-sectional side views;

Figure 10A is a bottom plan view of a portion of a keyboard illustrating exemplary apertures and complementary keys whose rotation within said apertures is limited to a finite set of orientations;

Figures 10B and 10C each depict a top plan view of one exemplary key of Figure 10A;

Figure 11A is a top plan view showing an exemplary key in one of its two locking orientations;

Figures 11B and 11C are cross-sectional side views of the key of Figure 11A in two different axial positions relative to a surrounding portion of a key guide;

Figure 12A depicts in a top plan view and two cross-sectional side views the key of Figure 5B modified to receive a complementary tool about the periphery of its upper portion;

Figure 12B depicts in a top plan view and two cross-sectional side views the key of Figure 5B modified to admit insertion of a complementary tool into its upper portion;

Figure 13A is a bottom plan view of a portion of a keyboard illustrating keys whose respective orientations are coordinated, in groups, by actuators;

Figure 13B is a bottom plan view of a portion of a keyboard illustrating keys whose respective orientations are electro-mechanically controlled;

Figure 14 is a flowchart depicting a method of arranging a keyboard according to the present disclosure; and

Figures 15A to 15D depict screenshots of the device of Figure 1, related to various user interfaces for managing and controlling keyboard arrangements;

and wherein like reference numerals are used throughout the Figures to denote similar elements and features.

### DETAILED DESCRIPTION

The present disclosure relates to customization of a keyboard of a handheld electronic device subsequent to manufacture of the keyboard.

In one aspect according to the present disclosure, a keyboard for a handheld electronic device is provided. The keyboard includes a key guide and a plurality of keys. Each key is retained laterally in the key guide and is operable for providing input to the device when depressed by a switch-activation distance in a direction substantially perpendicular to a plane defined by the key guide. Moreover, each key is rotatable about a respective axis of rotation substantially perpendicular to the plane defined by the key guide.

In another aspect according to the present disclosure, a handheld electronic device is provided. The device includes a microprocessor and a keyboard in electro-mechanical communication with the microprocessor. The keyboard includes a key guide and a plurality of keys. Each key is retained laterally in the key guide and is operable for providing input to the device when depressed by a switch-activation distance in a direction substantially perpendicular to a plane defined by the key guide. Moreover, each key is rotatable about a respective axis of rotation substantially perpendicular to the plane defined by the key guide.

In yet another aspect according to the present disclosure, a method of arranging a keyboard of a handheld electronic device is provided. The device includes a microprocessor and a keyboard in electro-mechanical communication with said microprocessor. The keyboard includes a plurality of keys, each rotatable under control of the microprocessor. The method comprises receiving a selection of one of the keyboard arrangements and controlling rotation of the keys, in accordance with the selected keyboard arrangement.

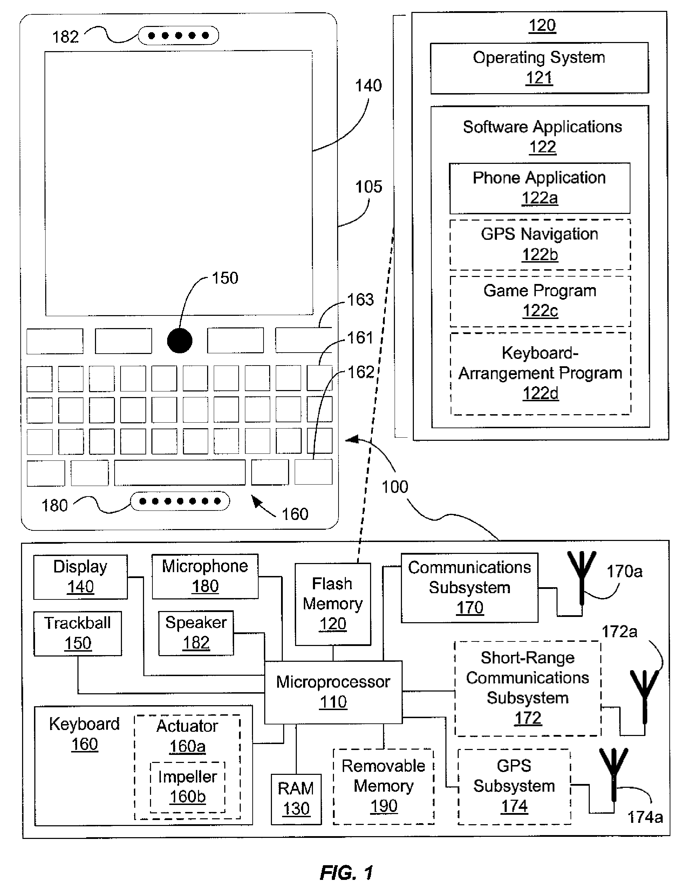

Referring first to Figure 1, there are shown a schematic diagram and a block diagram of a handheld electronic or mobile communication device 100 of the type known as a smart phone. A skilled person will appreciate that the present disclosure can be applied to other handheld electronic devices, as well. Optional components of device 100 are shown in dashed outline. The components of device 100 are contained within housing 105. Microprocessor 110 is connected to communications subsystem 170, which has a radiofrequency (RF) transceiver chip (not shown) and antenna 170a, through which device 100 can send and receive both phone and data communications; data communications can be, for example, conventional email or data and program code pushed to the device by a corporate entity associated with the device. A person skilled in the art will understand that multiple antennas can be used if device 100 is designed to communicate over several different RF bands.

Device 100 can contain additional, optional communications components connected to microprocessor 110. A short-range communications subsystem 172 (typically including its own antenna 172a and chip) can, for example, enable Bluetooth™ communications with device 100. Satellite-based location-determining hardware can also be provided, such as, for example, Global Positioning System (GPS) device 174 (typically including its own antenna 174a and chip); microprocessor 110 can run corresponding processing software, e.g., GPS Navigation application 122b. As will be understood by a skilled person, GPS is but one exemplary location-determining system. Thus, the term "GPS" as used herein is meant to include any analogous system.

A user can interact with device 100 - both for data communications and for controlling the functionality of the device - through a variety of input/output (IO) devices connected to microprocessor 110. These include microphone 180 and speaker 182, both of which can be used for, among other things, phone calls by a user of device 100. The user can receive visual information via a signal light (not shown) to indicate data transfer, battery-charging status, etc. The primary visual output device is display 140. An auxiliary input device is, for example, a depressible, scrollable trackball 150 or thumbwheel (not shown) or an optical navigation pad (not shown), which can also be depressible.

This disclosure relates to keyboard 160, shown in Figure 1 in a non-specific form. It comprises several types of keys: character keys (such as key 161), which are, in this illustration, arranged in rows and columns, but which could be in a staggered or other arrangement; secondary keys (such as key 162) for use in conjunction with a character key to select one of several characters corresponding to that key (e.g., upper-case, lower-case, and numeral/symbol); and special-purpose keys (such as key 163) for tasks such as placing a phone call, escaping from a menu, etc. The special-purpose keys 163 are generally large and are, therefore, not described in further detail herein; consequently, they are not depicted in any later figures. The secondary keys 162 are likewise not further described herein, but are depicted in some of the figures for reference. The present disclosure will be described in reference to the character keys (such as key 161) - typically the smallest and most frequently used - but can be applied to other keys, as well. These keys typically include alphanumeric characters and/or functions associated therewith, although alternate configurations may be possible. As will be explained in detail later, keyboard 160 can contain one or more actuators 160a for rotating each of one or more keys; each actuator can include an impeller 160b for powering the actuator.

Microprocessor 110 is further connected to random-access memory (RAM) 130 for executing computer instructions and to flash memory 120 for storing, amongst other things: an operating system 121 for running software applications 122 and managing the resources of device 100. As is well known, software applications 122 can be of a wide variety; of particular concern herein are applications that can benefit from a customizable keyboard, such as phone application 122a, GPS navigation application 122b, and game program 122c. Additionally, device 100 can be provisioned with keyboard-arrangement program 122d to customize keyboard 160 according to the present disclosure. Device 100 can optionally provide a receptacle for removable memory 190, which memory can be of various formats.

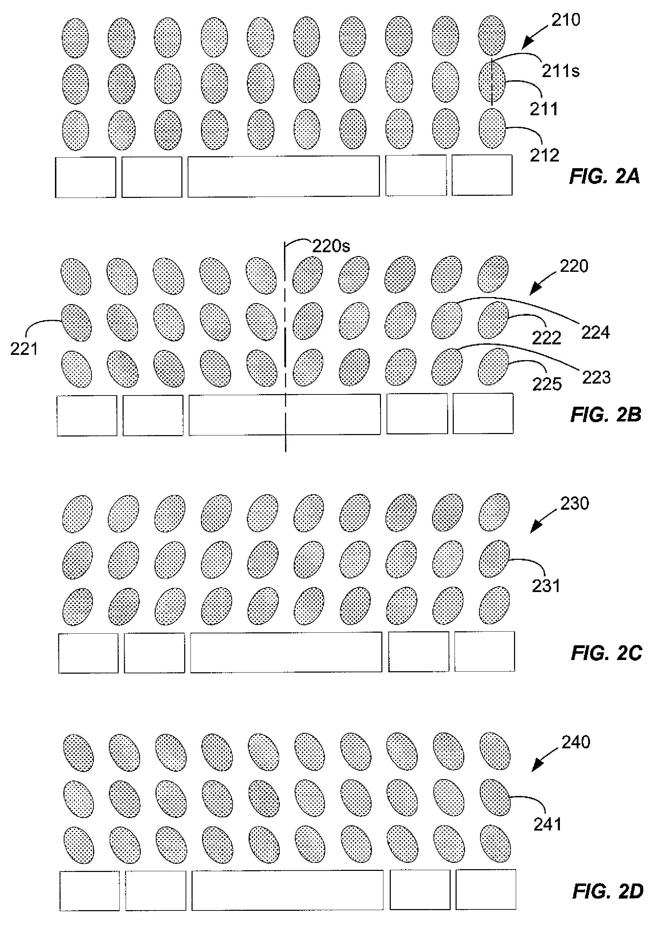

Now in reference to Figure 2A, key arrangement 210 is a variation of the key arrangement of generic keyboard 160 of Figure 1. In this variation, the character keys, such as keys 211 and 212, are not squares as in Figure 1, but are each of a generally oblong shape. While the illustrated shape is elliptical, it could be another shape, provided it is not circular. This is so that, if a key is rotated about an axis perpendicular to a plane defined by a keyboard having key arrangement 210, the key's footprint (i.e., contact area) for user contact would be different after rotation, therefore providing a user of device 100 a different interaction experience with that key. Although this same elliptical shape is used throughout the various keyboards illustrated in subsequent figures, it is anticipated that other non-circular shapes can be used for the character keys, and that not all characters keys need to have congruent shapes. Though it is anticipated that keys need not have any symmetry, the particular shape in question, being elliptical, has a major axis about which (in Figure 2A) it has bilateral symmetry. In key arrangement 210, each character key, such as key 211, has its bilateral axis of symmetry 211s oriented in an up-down direction relative to the way in which the keyboard would typically be viewed by a user of device 100. This bilateral axis of symmetry 211s provides one possible line of reference for describing rotation of key 211. Any line of reference through its axis of rotation could be used for describing rotation of a key, even a key lacking the type of symmetry exhibited by the particular shape exemplified by key 211. For reference purposes, the orientation of key 211 as it appears in Figure 2A will be referred to hereinafter as the "neutral orientation" for that key.

In Figure 2B, key arrangement 220 is a known variant of key arrangement 210, designed for a user who holds device 100 with both hands and types using his or her thumbs. In this variation, bilateral axis 220s separates key arrangement 220 into two halves, which in this variation are mirror-images of each other. The character keys on the left half of key arrangement 220 (e.g., key 221) appear rotated from the neutral orientation counter-clockwise by a common angle, and the character keys on the right half of the key arrangement (e.g., key 222) appear rotated from the neutral orientation clockwise by the same common angle. Although the illustrated common angle is 30 degrees, it could be another angle. In the known art, the character keys are maintained in these fixed orientations to facilitate typing on the left half of key arrangement 220 by the left thumb of a user and typing on the right half of the key arrangement by the user's other thumb; this design presumes that the user will use both thumbs to type when using device 100. If key arrangement 220 is used in such manner, then the user's access to individual keys is improved in the sense that the user is less likely to accidentally press a key neighbouring the desired key. This is because each thumb has a respective "approach angle" inclined inwardly from a respective lateral edge of device 100. Thus, in this arrangement of keys, keys that are diagonally neighbouring relative to the conventional (i.e., "visual") view of key arrangement 220, for example keys 223 and 222 or, alternatively, keys 224 and 225, are, from the "thumb perspective," left-right and, respectively, up-down neighbours. With the rotation of keys 222 to 225, the spacing between keys 222 and 223 is still substantial, but keys 222 and 225 are now better separated for articulation of the right thumb, due to the angling of the keys from the neutral orientation, than are corresponding keys 211 and 212 of key arrangement 210 in Figure 2A.

As stated, the fixed orientation of keys in key arrangement 220 was designed for typing with two thumbs. But some user of device 100 may hold it in one hand and type using a single thumb. Figures 2C and 2D illustrate two applications of the above-mentioned approach-angle design principle to configure key arrangements for typing with a single thumb. Key arrangement 230 in Figure 2C has all character keys, e.g. key 231, angled clockwise from the neutral orientation for advantageous usage by a right thumb. Key arrangement 240 in Figure 2D is oppositely configured, with all character keys, e.g. key 241, angled counter-clockwise from the neutral orientation for advantageous typing with a left thumb.

Clearly, to manufacture a single device in three different models, with different keyboards having respective key arrangements like those of Figures 2B, 2C, and 2D for customers with different typing preferences would require substantial expense, not to mention the problems of producing and distributing appropriate quantities of each model. Moreover, a user may want to type with two thumbs sometimes and with only one thumb at other times (for example, while holding an umbrella in one hand). Therefore, it is advantageous to provide a keyboard wherein keys can be rotated.

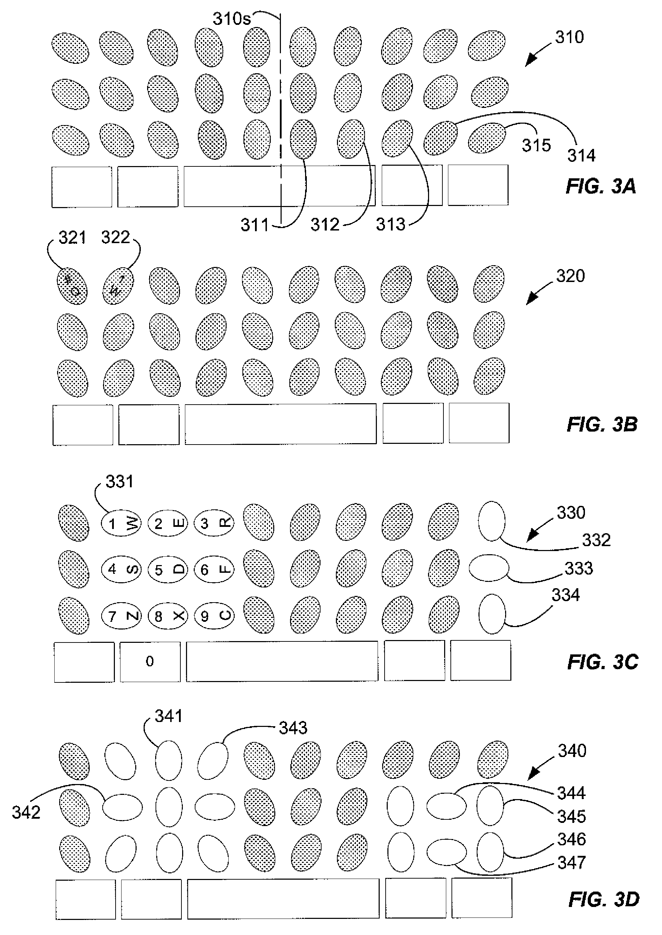

Many different embodiments will be described later, with various mechanisms for causing or allowing rotations of various types. Depending on how much flexibility in rotation is enabled, many other configurations are possible besides the basic ones shown in Figures 2A to 2D. Additional potentially useful configurations, some for specific applications, are illustrated in Figures 3A to 3D.

Key arrangement 310 of Figure 3A illustrates how clockwise and/or counter-clockwise rotation from the neutral orientation need not be by a common angle. To compensate for the fact that the approach angle of a thumb varies depending on which area of a keyboard is being accessed, the angle of rotation from the neutral orientation can be made progressively larger in relation to a key's distance from bilateral axis 310s of key arrangement 310. For illustrative purposes only, keys 311, 312, 313, 314, and 315 exhibit clockwise rotation of 0, 15, 30, 45, and 60 degrees, respectively. Other choices of angles are anticipated. Although key arrangement 310 illustrates all keys in a common column having a common angle of rotation, it is anticipated that the angle of rotation can also vary according to the row the key is in.

Key arrangement 320 of Figure 3B illustrates how a keyboard can be configured so that the orientation of the keys aids the usage of the keyboard in a mode that emulates a reduced keyboard. A reduced keyboard typically has fewer character keys than the keyboards illustrated thus far,. Most keys represent at least two characters without the use of a secondary key (such as Shift or Alt keys). For example, a reduced keyboard corresponding to a full QWERTY keyboard would have a single key both for typing 'Q' and for typing 'W'. Software running on a reduced-keyboard device aids in disambiguating keystrokes, suggesting whether a Q-keystroke or W-keystroke was intended when the Q/W key is depressed. When a full QWERTY keyboard is used to emulate a reduced keyboard, keys are paired - for example, keys 321 and 322 - to be interpreted as a single reduced-keyboard key. Disambiguation software makes a similar determination when either key of the pair is pressed. Thus, some typing errors are automatically corrected. To facilitate this emulation (and, additionally, cue the user as to the key-pairing), alternate columns of keys are oppositely rotated. For instance, key 321 is rotated counter-clockwise while neighbouring key 322 is rotated clockwise, contrary to the approach-angle design principle applied in key arrangements 220, 230, and 240 of Figures 2B, 2C, and 2D, respectively.

Key arrangement 330 of Figure 3C illustrates one configuration that can aid in use of a phone application running on device 100. The lighter keys are specific keys that have been oriented contrary to the known configuration of key arrangement 220 of Figure 2B. Each of the nine character keys that can, in numeric or "Alt" mode, represent the digits 1 to 9 (for example key 331) is rotated 90 degrees counter-clockwise from the neutral orientation. This helps these keys to stand out from the other keys that will not be used to place a call. To facilitate reading of key labels when the key is in different orientations for different purposes, different parts of the label can be differently oriented as illustrated on key 331. Optionally, additional keys may be re-oriented to indicate a special function during a phone call. For instance, keys 332 and 334 (each in their neutral orientation) can raise and lower volume, respectively; key 333 (rotated 90 degrees from its neutral orientation) can activate a mute or speakerphone function.

Key arrangement 340 of Figure 3D illustrates one configuration that can aid in use of applications where directional input rather than text input is needed. The lighter keys are specific keys that have been oriented contrary to known key arrangement 220 of Figure 2B. A keyboard for a mobile communication device typically does not have arrow keys, which are common on the larger keyboards used for laptop and desktop computers. Yet such keys can be advantageous for certain applications such as GPS navigation program 122b and game program 122c. For these, a subset of keys can be rotated to symbolize the respective directions they represent. For example, in keyboard 340, key 341 (representing an up direction) has its neutral orientation, key 342 (representing a left direction) has a 90-degree rotation from its neutral orientation, and key 343 (representing an up-and-left direction) has a 45-degree clockwise rotation from its neutral orientation. The symbolism of these keys' orientation obviates the need to put additional labelling on the keys to indicate their (occasional) function as arrow keys. For GPS navigation program 122b, keys such as 332 and 334 shown in Figure 3C can be used to zoom in and out, respectively. For game program 122c, keys such as keys 344 and 345 (optionally "doubled" by keys 347 and 346, respectively, to make them easier to press) can be given designated input roles, such as "Fire" or "Pause".

We turn now to describing various mechanisms that allow one or more keys to be manually or automatically rotated to transform one keyboard arrangement into a different one.

The first consideration is structures that allow rotation of a depressible key. For rotation of the key to be of use for the purposes of this disclosure, namely to present a different tactile experience for a user of device 100, at least an upper portion of the key lacks some rotational symmetry, i.e., the portion is not circular in shape as viewed from above the keyboard. Yet a lower portion of the key and an aperture of the key guide through which the lower portion passes (and moves inwardly when the key is depressed) is co-operatively shaped to allow selective rotation of the key.

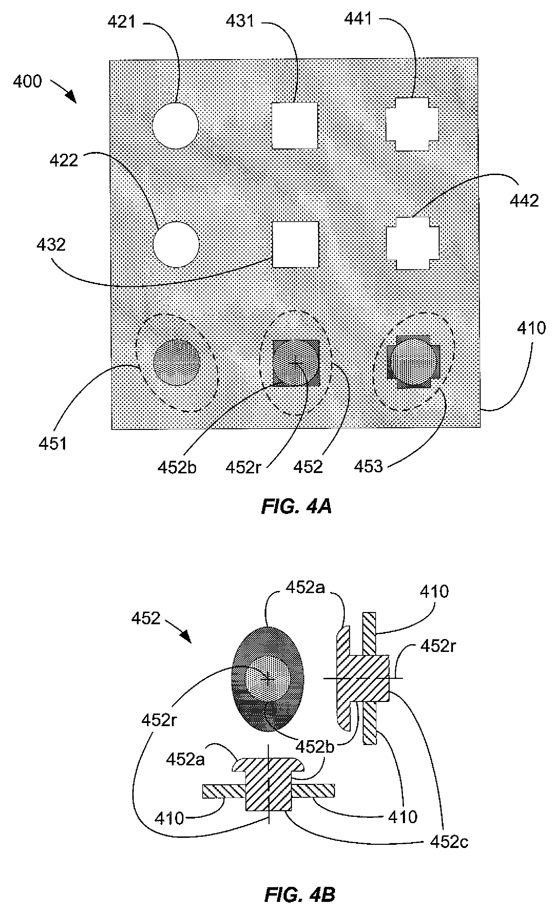

Specifically, in reference to Figure 4A, a detailed portion of keyboard 400, is shown from below. Key guide 410 is substantially planar and forms apertures for receiving therein and laterally retaining keys, such as keys 451 to 453, so that they do not move left-right or up-down, but can still be depressed inwardly. Figure 4A illustrates several differently shaped apertures formed in key guide 410, each aperture being, nevertheless, rotationally compatible with keys of the same shape, such as key 452 as detailed in Figure 4B. Apertures 421 and 422 define substantially circular holes, apertures 431 and 432 define square holes, and apertures 441 and 442 define substantially square holes with modified, "indenting" corners. In Figure 4B, key 452 is shown from underneath and (with portions of key guide 410) in cross-sectional side views. Key 452 includes an upper portion 452a - shaped to provide different tactile experiences when in different orientations - that lies above key guide 410, as well as a shaft 452b, which passes through the key guide. Shaft 452b has a substantially circular cross-section. Returning to Figure 4A, keys 451 to 453, whose respective lateral extents above key guide 410 are shown in dashed outline, illustrate three different orientations. Key 452 is in its neutral orientation (as defined hereinabove). Rotation of key 452 about its axis of rotation 452r can result in orientations such as those of the neighbouring keys shown; key 451 is rotated counter-clockwise from the neutral orientation, whereas key 453 is rotated clockwise from the neutral orientation.

Physical considerations such as friction and durability may dictate how a key and its respective aperture are co-operatively designed to make contact. Shaft 452b of key 452 of Figure 4B has a substantially circular cross-section. Therefore, with a key shaft shaped like key shaft 452b, aperture 421 of Figure 4A would make continuous contact about its periphery, aperture 431 would make tangential contact at four points, and aperture 441 would make point-contact at four points. Other variations of the schemes of Figure 4A will be apparent to the skilled person. For example, circular aperture 421 is also rotationally compatible with a key shaft having as its cross-section a polygon inscribed in the aperture's circular periphery. Likewise, any circumscribed polygonal aperture - not just the square periphery of aperture 431 - would be rotationally compatible with the circular cross-section of shaft 452b. Similarly, aperture 441 can be generalized to holes providing three or more point-contacts for a circular cross-section of shaft 452b.

Returning to Figure 4B, the upper portion 452a of key 452 has been depicted as providing a substantially flat contact surface for a finger of a user of device 100. However, it is also conventional to provide a substantially ovoid upper portion (not shown), which would appear as a single arc in a side-view cross-section of key 452. Alternatively or additionally, the contact surface could form a central depression (not shown) for aiding user contact with key 452.

Likewise, bottom 452c of shaft 452b, as depicted, is merely one representation of a lower extremity of key 452. It is also conventional for the lower extremity to be a conical point or a rounded terminus for contacting either (a) a biasing element, e.g. an element made of an elastomer, that urges the key upwardly (toward its natural, non-depressed position) or (b) a switch, e.g. a dome switch, that, when activated, completes an electrical circuit, thereby sending an input signal to microprocessor 110. Such contacted elements are not shown, and accordingly will not be discussed in greater detail herein.

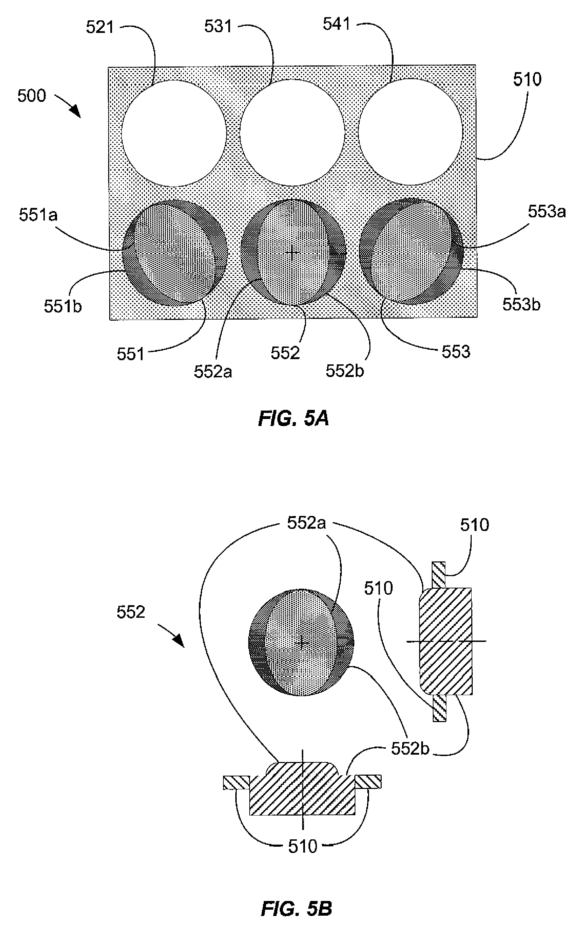

Turning now to Figures 5A and 5B, an alternative key-design scheme is illustrated. The key design previously illustrated in Figures 4A and 4B features a gap defined between upper portion 452a and key guide 410 when key 452 is in its natural, non-depressed position. The present alternative provides a key surface with no such gap. A detailed portion of keyboard 500 is shown from above. Key guide 510 forms a number of apertures, such as apertures 521, 531, and 541, each defining a substantially circular hole. Keys 551, 552, and 553 have substantially circular bases 551b, 552b, and 553b, respectively, each base having its upper surface flush with the upper surface of key guide 510 when the respective key is in its natural, non-depressed position. Atop bases 551b, 552b, and 553b sit upper portions 551a, 552a, and 553a, respectively; the upper portions are depicted in Figure 5A with different shading from the bases only for the purposes of distinguishing them in the overhead view. In practice, the upper portions might be differently coloured or even made of a different material than the bases, perhaps to make the bases match key guide 510, to visually distinguish what appear to be "keys" from what appears to be "the background/matrix", or to provide a certain contact experience for a user of device 100. Nonetheless, as the cross-sectional side views of key 552 show, upper portion 552a and base 552b function as a single unit, rotating together and depressing together. In contrast to the key-design scheme illustrated in Figures 4A and 4B, upon depression of key 552, a visible part thereof, namely the base 552b, recedes below the upper surface of key guide 510, as shown in Figure 5B.

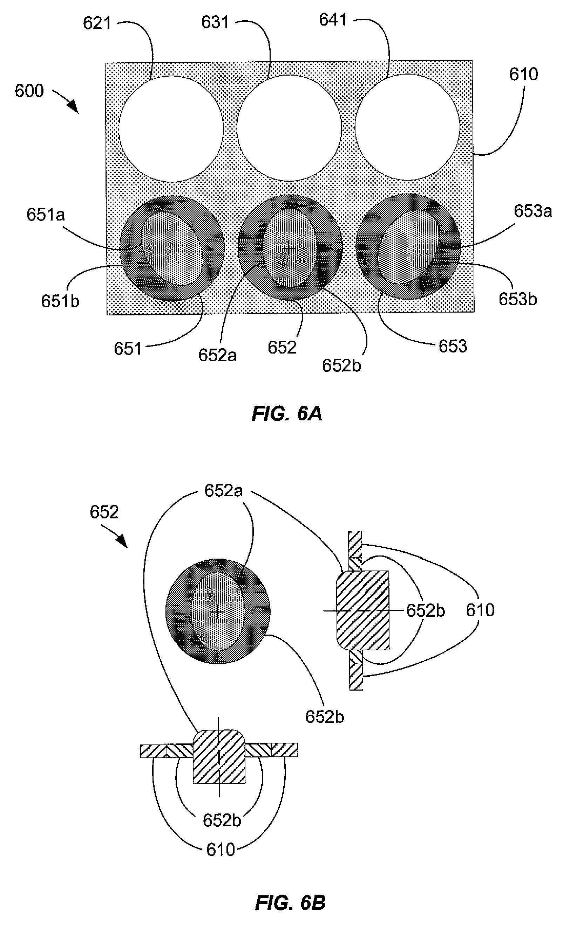

The key design previously illustrated in Figures 5A and 5B features a quasi-annular base 552b (whose upper surface extends between its circular outer periphery and the osculating non-circular periphery of upper portion 552a) of key 552 that is flush with the upper surface of key guide 510 when the key is in its natural, non-depressed position and that is recessed below the upper surface of the key guide when the key in its entirety - both base and upper portion - is depressed. A further alternative key-design scheme, shown in Figures 6A and 6B, provides a substantially circular rotating key whose outer periphery remains flush with the upper surface of the key guide. A detailed portion of keyboard 600 is shown from above. Key guide 610 has a number of apertures, such as apertures 621, 631, and 641, each defining a substantially circular hole. Keys 651, 652, and 653 have substantially circular bases 651b, 652b, and 653b, respectively, each base having its upper surface permanently flush with the upper surface of key guide 610. Quasi-annular bases 651b, 652b, and 653b surround cores 651a, 652a, and 653a, respectively Unlike with the upper portions of the key-design scheme of Figures 5A and 5B, each core and the circular periphery of its respective base should be designed not to osculate, for reasons that will soon become apparent. As with the upper portions 551a, 552a, and 553a depicted in Figure 5A, the cores 651a, 652a, and 653a have a non-circular shape (when viewed from above) and project higher than the respective bases. But each of keys 651, 652, and 653 has two distinct parts. As can be seen from Figure 6B, base 652b and core 652a remain in fixed rotational relationship to one another, but only the core is depressed relative to the key guide 610; the base remains at the same axial position. Although Figure 6B depicts core 652a as having the same cross-section below the base as it has through the base, when key 652 is in its natural, non-depressed position, a skilled person will understand that maintaining a constant cross-section is desirable only for cross-sections that will, at some time, pass through the aperture in base 652b; the lower part of core 652a can be of any shape suitable for contacting a biasing element or switch, as mentioned earlier.

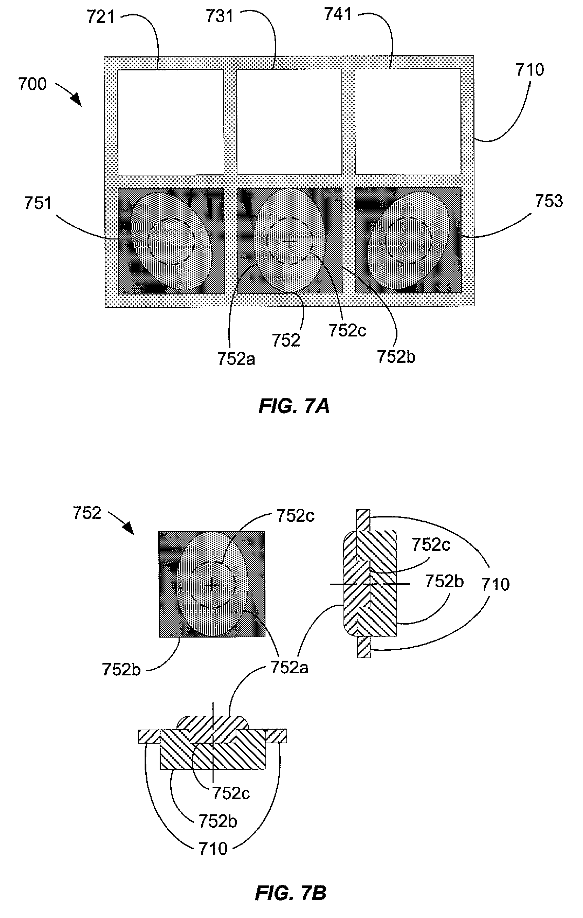

Now in reference to Figures 7A and 7B, yet another alternative key-design scheme is illustrated. A detailed portion of keyboard 700, shown from above in Figure 7A, features apertures, such as apertures 721, 731, and 741, defining substantially square holes in key guide 710. For the purposes of the present key-design scheme, apertures can have any shape(s), as long as (a) the corresponding keys have respective peripheries shaped so that the keys are laterally retained by the respective apertures, and (b) the peripheries cannot be rotated within the respective apertures. This is because none of the keys, such as keys 751 to 753, rotates as a whole. Instead, each key comprises two parts, one of which rotates within the other, the latter remaining rotationally fixed. In Figure 7B, key 752 represents one of many ways in which this can be achieved. Base 752b and upper portion 752a are co-operatively shaped so that the upper portion can be rotated relative to the base. Upper portion 752a has a non-circular shape (when viewed from above) - to provide different tactile experiences when the respective keys are rotated - and projects higher than base 752b. Base 752b is shaped to prevent rotation within its respective aperture and to provide an axially sliding interface therewith when key 752 is depressed. Any torque transmitted to upper portion 752a about its axis of rotation results in its rotation relative to both base 752b and key guide 710. Whereas the two parts of key 652 (shown in Figure 6B) rotate as a unit but only core 652b can be depressed, in the present key-design scheme, the two parts are depressed as a unit, but only upper portion 752a is rotatable.

The lower extremity 752c of upper portion 752a is shown as fitting within a complementary depression in base 752b; however, a skilled person will appreciate that there are other complementary designs, within the intent of this disclosure, that achieve the fundamental goal of having a two-part key, both parts depressing together, but only one part rotatable. For example, either part can be substantially annular, with a hole therethrough for receiving a complementary portion of the other part. Another design option (not shown) is to form upper portion 752a with a circular hole centred about the rotational axis of key 752 and to form a complementary (rotationally compatible) upper extremity of base 752b that passes through said hole so that the upper extremity's top surface is flush with the surrounding quasi-annular top surface of upper portion 752a. This exposed, central surface of base 752b is visible, yet rotationally fixed, therefore any label (e.g. "M") applied to said area will maintain its orientation (for consistent viewing by a user of device 100), irrespective of the orientation of upper portion 752a.

Thus far, it is apparent that in each of the four exemplary key-design schemes illustrated, a key guide retains keys laterally; that is, it keeps them from moving left-right or up-down within the plane defined by the keyboard. We now turn to the question of how to restrain "axial" motion, i.e., linear motion substantially parallel to a key's axis of rotation and perpendicular to a plane defined by the keyboard. "Inward" axial motion of the key (i.e., motion generally toward the interior of device 100) is the same as depression of the key Inward motion is ultimately constrained by parts of device 100 not presently disclosed in detail herein, such as the aforementioned biasing element or switch. To prevent a key from causing a respective key-press signal to be sent when no inward force is applied to the key, the key is biased "outwardly" (i.e., generally away from the interior of device 100) in some manner, commonly by a biasing element made of an elastomer, toward a natural, non-depressed position.

A skilled person will appreciate that some provision must be made to restrain outward movement of a key so that, regardless of how device 100 is held or the key is nudged; the key does not fall out. The skilled person will likewise appreciate that there are a great many ways to limit how far "out" a key can move within a key guide by appropriately designing one or both of those structures. Some devices that can be added to a rod-like element for limiting its axial motion include cotter pins and retaining rings (which might or might not fully encircle said element).

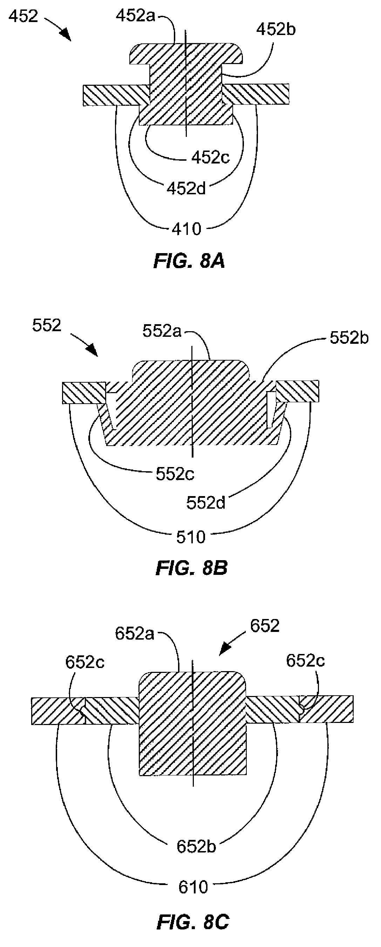

Figures 8A and 8B illustrate other solutions in relation to structures already discussed. In reference to Figure 8A, key 452, previously introduced in Figures 4A and 4B, has been modified so that bottom 452c of shaft 452b has been widened to form peripheral flange 452d; such a flange could be formed during manufacture of the keyboard by deformational pressure from below key guide 410 or by joining two parts - one from above and one from below - to form key 452. In reference to Figure 8B, key 552, previously introduced in Figures 5A and 5B, has been modified so that base 552b has two or more flanges, such as flanges 552c and 552d, which naturally incline radially outwardly, but which can be flexed radially inwardly; this arrangement allows key 552 to be inserted from above key guide 510 until the key snaps into place, with temporarily contracted flanges 552c and 552d recoiling to their natural, outwardly inclined position. Clearly, flanges analogous to 552c and 552d could be incorporated as an alternate modification of key 452, which would allow the key to be simply inserted from above key guide 410. Likewise, a peripheral flange analogous to flange 452d could be incorporated as an alternate modification of key 552, which would allow the key to be simply inserted from below key guide 510.

As an alternative to having a key and the key guide co-operate to axially retain the key, it is further anticipated that a lower extremity of a key can be attached to an underlying structure, for example its respective biasing element (not shown), in a manner allowing rotation of the key. This could require the lower extremity and the underlying structure to be co-operatively shaped.

A different type of axial-movement restriction may be desirable for quasi-annular base 652b of key 652, previously introduced in Figures 6A and 6B. Ideally, both outward and inward axial movement of base 652b should be prohibited. In reference to Figure 8C, two complementary modifications have been made. The substantially circular outer periphery of base 652b has been modified to incorporate a peripheral projection 652c intermediate its upper and lower edges. The substantially circular periphery of the corresponding aperture in key guide 610 (analogous to aperture 631 in Figure 6A) has been modified to incorporate a channel, intermediate the upper and lower surface of key guide 610, shaped to receive projection 652c. Projection 652c and the complementary channel each have semicircular cross-sections in this example, to facilitate snapping base 652b into its corresponding aperture during manufacture. However, a skilled person will understand that other cross-sections are possible, and the location of projection 652c and the channel can be swapped between base 652b and the corresponding aperture.

Returning to Figure 7B, it will be apparent to a skilled person that it is desirable to prevent upper portion 752a from moving axially relative to base 752b of key 752, and that this can be achieved by complementary modifications of the two parts analogous to the modifications described in reference to Figure 8C. Each of the anticipated variations of key 752 can likewise be modified to assure the two parts remain in fixed axial relation to one another.

A further consideration is that the rotation should be selective, in the sense that undesired rotation should be prevented and only desired rotation should be allowed. Undesired rotation includes rotation undesired by a user of device 100, e.g., rotation while the device is not being used or while a key is being pushed; in other words, rotation should be allowable only when it serves the purposes of the user, whether he or she needs to take a specific action to effect rotation, or rotation is effected automatically on his or her behalf. Moreover, undesired rotation can also include rotation a designer of device 100 wishes to prohibit. In addition to rotation in inopportune circumstances, the designer may wish to prohibit rotation to certain orientations. In particular, the design may wish to allow rotation only through a predetermined range of orientations or to only allow orientations belonging to a predetermined finite set of orientations.

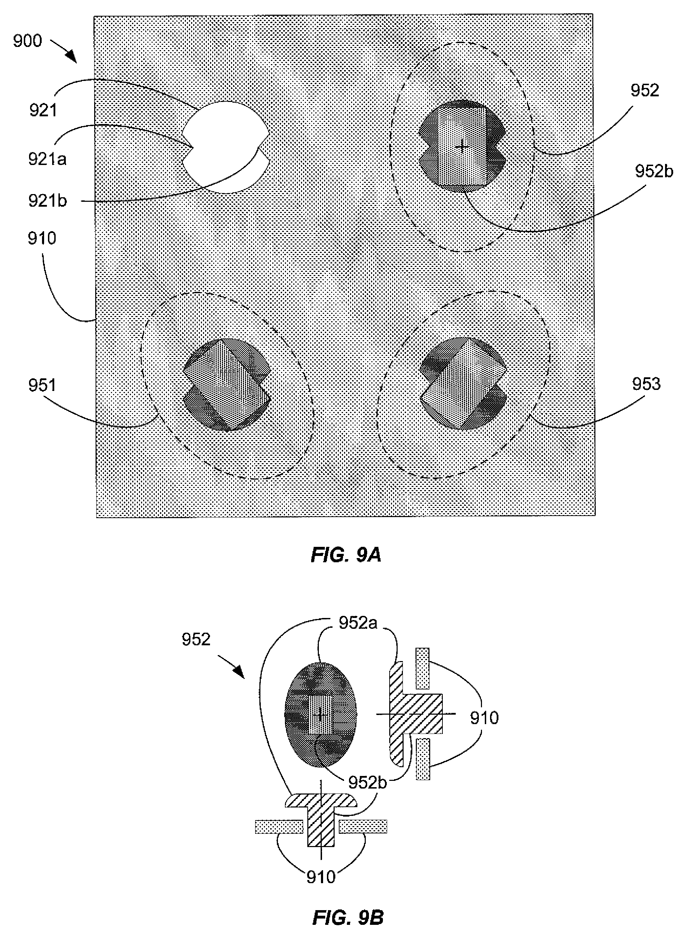

Turning to Figures 9A and 9B, one exemplary scheme for limiting rotation to a predetermined range of orientations is illustrated. In Figure 9A, a detailed portion of a keyboard 900 is shown from its underside. Key guide 910 has a number of apertures, such as aperture 921, shaped to co-operate with keys, such as keys 951 to 953, whose respective lateral extents above the key guide are shown in dashed outline. Aperture 921 is a modified circular hole, the modifications being, in this example, triangular protrusions 921a and 921b that encroach on the circular hole. The keys and the respective apertures through which they pass and rotate are co-operatively shaped. In Figure 9B, key 952 is shown from underneath and (with portions of key guide 910) in cross-sectional side views. Key 952 comprises an upper portion 952a - shaped to provide different tactile experiences when in different orientations - that lies above key guide 910, as well as shaft 952b that passes through the key guide. Shaft 952b has a substantially rectangular cross-section designed to abut at least one of the protrusions corresponding to 921a and 921b at each of the extremes of the range of allowed orientations; due to the complementary shaping of shaft 952b, the protrusions thus inhibit rotation beyond the counter-clockwise extreme illustrated in Figure 9A by key 951 and the clockwise extreme illustrated by key 953. Although the respective shafts of keys 951 and 953 abut both projections of the respective apertures, a skilled person will understand that abutment with either projection provides an equivalent prohibition to rotation. The skilled person will further appreciate that many other schemes for limiting a range of rotation are well known in the art and are within the intent of this disclosure.

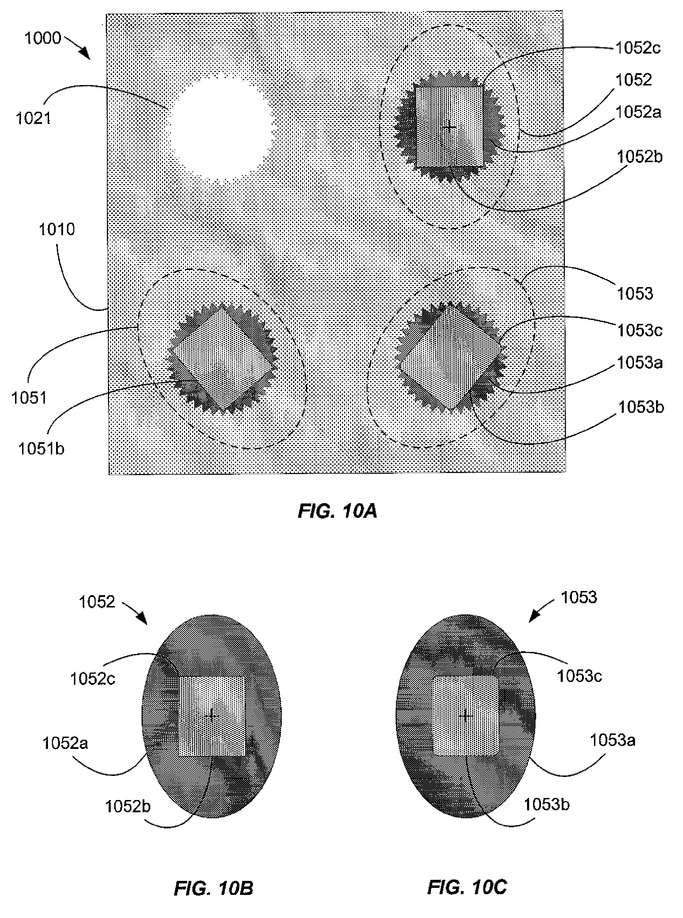

Now in reference to Figures 10A, 10B, and 10C, one exemplary scheme is illustrated for limiting rotation of a key to only a predetermined, finite set of orientations. In Figure 10A, a detailed portion of keyboard 1000 is shown from its underside. Key guide 1010 has a number of apertures, such as aperture 1021, shaped to co-operate with keys, such as keys 1051 to 1053, whose respective lateral extents above the key guide are shown in dashed outline. Aperture 1021 is a modified circular hole, the modifications being, in this example, thirty-six small triangular protrusions that encroach on the circular hole. The keys and the respective apertures through which they pass and rotate are co-operatively shaped. In Figure 10B, key 1052 is shown from underneath. Key 1052 includes an upper portion 1052a - shaped to provide different tactile experiences when in different orientations - that lies above key guide 1010, as well as shaft 1052b that passes through the key guide. Shaft 1052b has a substantially rectangular cross-section designed so that at least one of its four corners, e.g. corner 1052c, fits in a depression formed between two adjacent protrusions as shown in Figure 10A. Key 1051 illustrates a different orientation in which corners of shaft 1051b engage depressions in the generally circular periphery of said key's respective aperture in key guide 1010. In all, there are thirty-six distinct orientations allowed in this scheme. The number of orientations happens to match the number of depressions, but a skilled person will realize that such a numerical match need not be the case in other schemes that fall within the intent of this disclosure.

Figure 10C shows, from underneath, an alternative key 1053 that is shaped to co-operate with an aperture congruent to aperture 1021, with the same effect of limiting rotation to thirty-six analogous orientations. Key 1053 has an upper portion 1053a congruent to the analogous portion 1052a of key 1052. Shaft 1053b of key 1053 differs from the analogous shaft 1052b of key 1052 only in that the generally rectangular cross-section has been modified to have rounded corners, such as corner 1053c. The radius of curvature of rounded corners such as corner 1053c as well as the resilience of the co-operating aperture depressions may require the width and height of the rectangular cross-section of shaft 1053b to be slightly larger than for shaft 1052b in order for corner 1053c to engage a given depression as positively as does corner 1052c.

A skilled person will appreciate that, by suitable choice of the materials and geometric structures of the co-operating aperture depressions and shaft corners, rotation of a key such as key 1053 from any one of the predetermined allowable orientations can be impeded until a predetermined torque is applied to the key about its rotational axis. Whether such "clicking" out of (and into) position is possible and at what level of torque is influenced by such factors as precise profile of the corners and complementary depressions. For example, the alternating depressions and projections of an aperture periphery can be given a shape resembling bevelled teeth, such as can be found in some types of pinions; this is but one profile that would facilitate clicking a key into and out of an allowable orientation.

Alternatively, the co-operating structures of a key and its corresponding key-guide aperture can be designed so that rotating the key out of a predetermined allowed orientation is only possible if the key is depressed from its natural, pre-determined position by a predetermined "release distance." It is highly desirable that this release distance exceed the "switch-activation distance" - conventionally on the order of 0.2 to 0.25 mm for keyboards of small mobile communications devices - by which the key must be depressed in order for the key to perform its intended function, namely, to activate a switch (not shown) beneath and corresponding to the key in order to cause a key-pressed signal to be sent to processor 110. This is so that the key does not become freely rotatable while the key is in normal use. Although depressing the key by the release distance will, along the way, result in an extraneous key-pressed signal being sent to processor 110, the registering of said signal can typically be undone (e.g. by a subsequent "Delete", "Backspace", or "Escape" keystroke), or it may be performed when device 100 is in an input mode (e.g., a home screen) in which the extraneous keystroke is ignored, as it has no current relevance. In any case, the pressing of a key in order to rotate it would be a relatively infrequent manual event. It will be apparent to a skilled person that the co-operating structures of a key and its corresponding key-guide aperture can be designed so that rotating from a pre-determined allowed orientation may require some combination of applying inward pressure and applying torque.

There are various ways to design co-operative structures that impede rotation of a key in the absence of depression of that key by a pre-determined release distance from its natural, non-depressed position. Returning to Figure 10A, it will be apparent to a skilled person that key-shaft corners such as corner 1052c and a complimentary depression in the periphery of an aperture such as aperture 1021 can be made to a thickness so limited that the structures lockingly engage while the key is not depressed or while it is depressed by a distance less than the release distance; at and beyond that distance, they become disengaged, and the key can freely rotate.

A skilled person will appreciate that the same set of orientations allowed in the scheme illustrated in Figure 10A could be achieved by providing a key shaft with a substantially circular cross-section having depressions therein for receiving complimentary projections along the periphery of a corresponding aperture that guides the key.

The skilled person will further understand from what has been disclosed so far that aspects of the approach illustrated in Figure 9A and the approach illustrated in Figure 10A can be combined to limit rotation of a key to a finite number of orientations that are within a range of orientations that excludes one or more significant portions of the full, 360-degree range. For example, several of the small protrusions along the periphery of aperture 1021 in Figure 10A could be replaced by larger protrusions comparable to protrusions 921a and 921b of Figure 9A to provide for fewer allowed orientations, but still spaced at increments of 10 degrees.

The skilled person will further appreciate that the scheme illustrated in Figure 10A forces the key to remain in only a finite number of orientations because the small depressions alternate with protrusions about the periphery of such as aperture 1021, the corners of shaft 1052b or 1053b fit snugly in said depressions, and, therefore, there are no other orientations in which the key can remain. However, it is possible to provide a small number of widely spaced orientations in which the key can be lockingly retained, with free rotation allowed in between successive orientations. For example, if along the periphery of aperture 1021 only every third projection was retained and the others were removed, there would be only twelve orientations - spaced at 30-degree intervals - in which shaft corners would fit snugly in respective aperture depressions; in rotating the key from a first orientation to a second, neighbouring orientation, the key would snap out of the first orientation upon application of a predetermined torque, rotate "freely" (impeded only by friction) for approximately 30 degrees, then snap into the second orientation upon a second application of the predetermined torque.

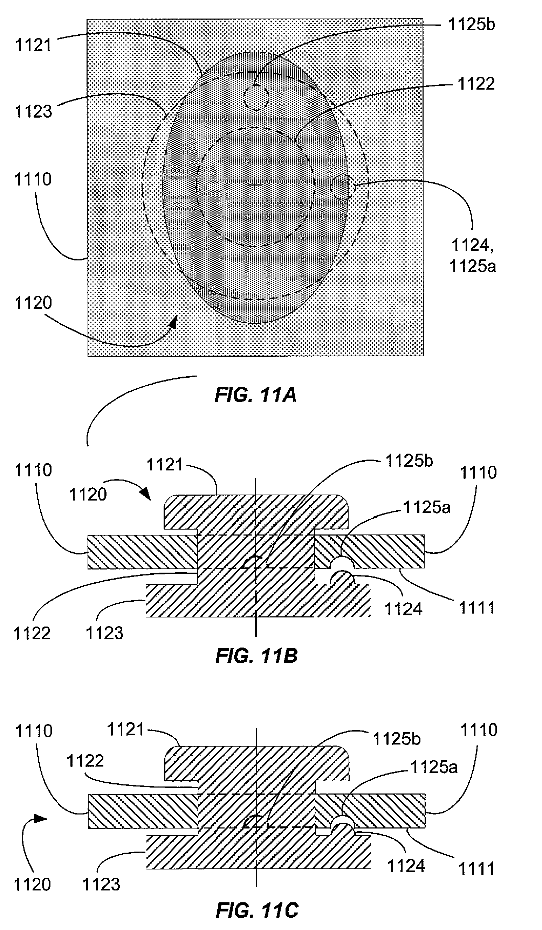

Referring now to Figures 11A to 11C, an alternative scheme is illustrated for rotationally locking a key into one of a finite set of lockable orientations. In the present scheme, the complimentary structures that lockingly engage do not involve the periphery of an aperture. Key 1120, a further modification of key 452 as shown in Figure 8A, is shown in the context of its immediate environment, namely a portion of key guide 1110. Upper portion 1121 of key 1120 is non-circular - to provide different tactile experiences when in different orientations - as viewed from above in Figure 11A and lies above key guide 1110. Shaft 1122 has a substantially circular cross-section (shown in Figure 11A in dashed outline) that passes through an aperture (also substantially circular, in this case) in key guide 1110. The complimentary shapes of the shaft and the aperture produce no impediment to rotation other than friction. Lower end 1123 of key 1120 lies below key guide 1110. In this case, it has a substantially circular shape (shown in Figure 11A in dashed outline), but the shape of its radial extent is irrelevant to its functioning, as long as part of it extends radially outward far enough to support upward projection 1124. Lower surface 1111 of key guide 1110 has two downwardly facing depressions 1125a and 1125b (shown in Figure 11A in dashed outline), each shaped to receive projection 1124 when key 1120 is in its natural, non-depressed position and rotated to a suitable respective orientation.

In this particular example, key 1120 has only two lockable orientations: its neutral position, as shown, and rotated 90 degrees counter-clockwise therefrom; aside from those two orientations, the key's rotation is impeded only by friction (which is enhanced by the upward biasing of the key - by a biasing element not shown or specified - if no downward force is applied to the key). It will be apparent to a skilled person that any reasonable number of complimentary depressions and projections can be provided to achieve a desired number of lockable orientations, and the depressions and projections can be swapped between key 1120 and key guide 1110. It is anticipated that retaining flanges such as 552c and 552d in Figure 8B could play double-duty as orientation-locking projections that function equivalently to projection 1124.

Turning now to Figure 11B, key 1120 is shown, in cross-section, depressed by a distance slightly exceeding a pre-determined release distance. Figure 11C illustrates key 1120 depressed by the pre-determined switch-activation distance, at which a key-pressed signal will be sent to microprocessor 110; in this particular example, the rounded shape of protrusion 1124 allows the key to be rotated upon application of a certain amount of torque to the key - an amount greater than would be required when the key is positioned as in of Figure 11B. To further impede rotation in the position of Figure 11C, projection 1124 and complimentary depression 1125a can be formed in a cylindrical or other suitable shape.

Although the co-operating structures in the rotation-impeding schemes exemplified by Figures 10A to 10C and 11A to 11C are on the key and the key guide, a skilled person will understand that these rotation-impeding schemes can be adapted to the rotation-enabling scheme exemplified by Figures 7A to 7C by having part of the rotation-impeding structure located on the non-rotatable base 752b of key 752.

Whether a rotatable key is impeded from rotating freely by specific, co-operating structures or, on the other hand, merely by friction, manual rotation of the key can be facilitated by co-operatively shaping the key and a complimentary tool so that the latter can be used to apply torque to the key about its axis of rotation.

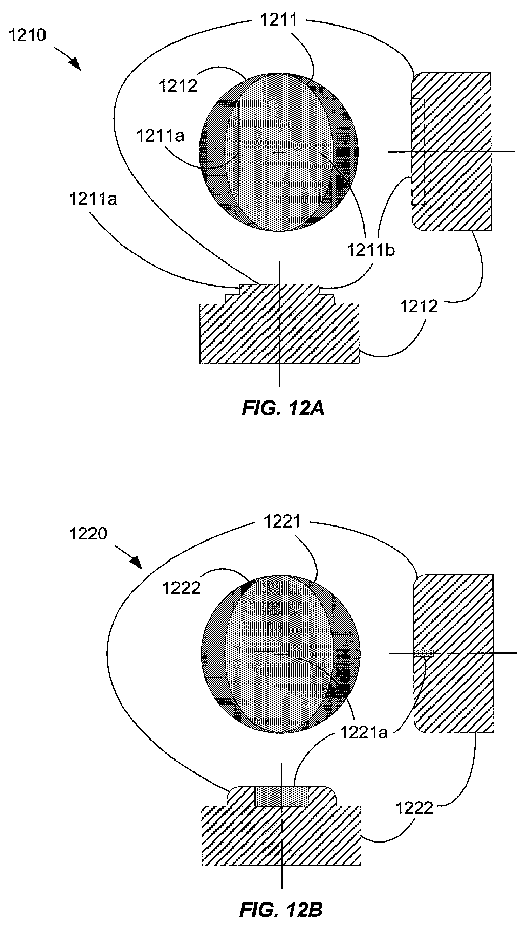

Referring now to Figure 12A, a modification 1210 of key 552 of Figure 5B is depicted in a top plan view and two cross-sectional side views. Base 1212 of key 1210 is identical to base 552b of key 552. Upper portion 1211 of key 1210 differs from upper portion 552a of key 552 in that parallel flat walls 1211a and 1211b are formed in opposite sides of upper portion 1211. This modification allows at least a portion of the periphery of upper portion 1211 to receive thereabout a complementary tool such as a tiny wrench (not shown); it may also be possible for a user of device 100 to grip opposed walls 1211a and 1211b. A skilled person will understand that there are alternative ways, within the intent of this disclosure, to co-operatively shape upper portion 1211 and a complimentary tool so that the latter can grip the periphery of the upper portion to apply torque to key 1210 about its axis of rotation. For example, the periphery of upper portion 1211 can have 3 pairs of opposed, parallel walls, sized and arranged so that a standard-sized hexagonal socket can fit snugly about the upper portion (even if the periphery does not form a regular hexagon).

Referring now to Figure 12B, a different modification 1220 of key 552 of Figure 5B is depicted in a top plan view and two cross-sectional side views. Base 1222 of key 1210 is identical to base 552b of key 552. Upper portion 1221 of key 1220 differs from upper portion 552a of key 552 in that the top of upper portion 1221 forms an inward slot for receiving, for example, a blade of a screwdriver. A skilled person will understand that there are alternative ways, within the intent of this disclosure, to co-operatively shape upper portion 1221 and a complimentary tool so that the latter can be inserted into the upper portion to apply torque to key 1220 about it axis of rotation. For example, the top of upper portion 1221 can have an axially oriented hole of hexagonal cross-section, for receiving a standard-sized Allen wrench. Alternatively, the periphery of upper portion 1221 can have a radially oriented hole for receiving a tiny rod, extending radially from key 1220, that can provide leverage for applying torque to the key about its axis of rotation.

It is also anticipated that co-operating structures that, when lockingly engaged, impede rotation of a key can further be designed so that a tool or a mechanism within or proximate the keyboard can be used to release the structures from their locking engagement so that the key can be rotated.

It is further anticipated that an actuator mechanism within or proximate the keyboard can effect rotation of keys, individually or in groups, without manual manipulation of the key from above the keyboard. Such a mechanism may itself be manually controlled by a user of device 100, or it may be electro-mechanical in nature and controlled through signals from microprocessor 110.

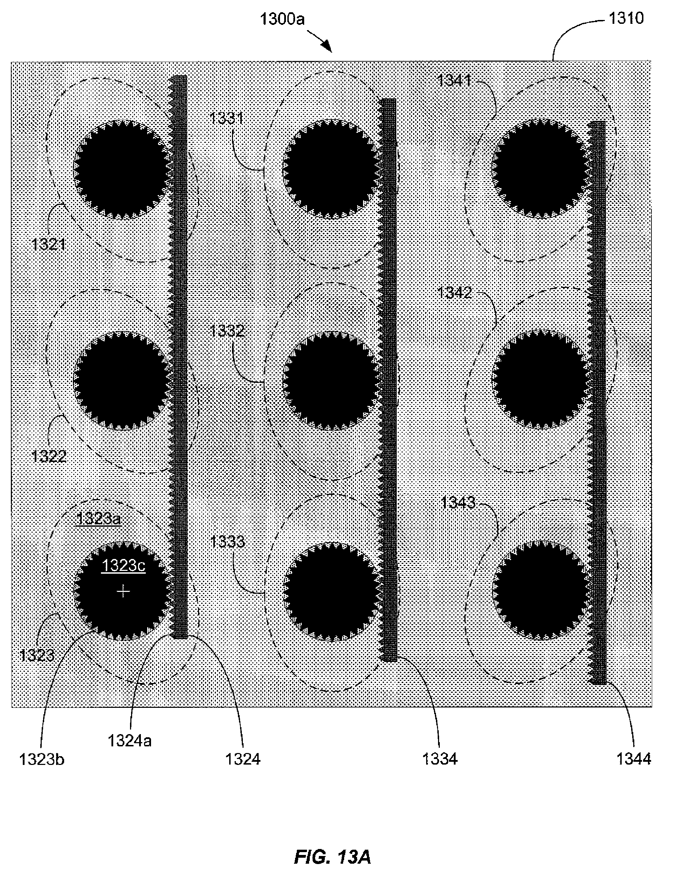

Referring now to Figure 13A, a scheme is illustrated for rotating a group of keys as a linked unit by means of an actuator mechanism. Keyboard 1300a, shown from below, includes key guide 1310, which, in the portion shown, has nine apertures receiving nine respective keys, whose respective extents above the key guide are shown as dashed outlines. Each aperture according to the present scheme defines, in this case, a substantially circular hole. Recall, however, that alternatively shaped apertures, such as apertures 431 and 441 in Figure 5A, also permit rotation of a complementarily shaped key, such as key 452. Each key according to the present scheme is a modified version of key 452, detailed earlier in Figure 4B. For example, key 1323 has a non-circular upper portion 1323a (hidden above key guide 1310) and base 1323b that has substantially circular cross-sections at the levels which pass through its receiving aperture when the key is at any position within its inward-outward range of axial motion. As can be seen from earlier examples, a differently shaped key-base cross-section (at said levels), for example the substantially rectangular cross-section of base 952b of key 952 in Figure 9b, can be rotationally compatible with a substantially circular aperture. It will become evident that such variations in complementary apertures and cross-sections of respective keys at axial levels where the latter pass through the former will not impede the additional functionality provided by the modifications to the key and the additional mechanism described next.

The modification to key 1323 that enables the added functionality of the present scheme is a lower portion 1323c having a cross-section formed with a least one depression. In this example, lower portion 1323c is located at the very bottom of base 1323b, and the cross-sections of the lower portion do not extend radially beyond the extent of the cross-sections (circular in this case) that enable rotation within the aperture receiving key 1323, but these exemplary features are not required. In this particular case, the periphery of lower portion 1323c is formed as alternating depressions and projections, which together form gear teeth of a pinion. The respective pinions of keys 1321, 1322, and 1323 engage actuator 1324, an elongate member that includes, for each of the keys, at least one projection that is received by a respective depression of the respective lower portion of that key. In this particular case, the side of actuator 1324 facing keys 1321 to 1323 is formed entirely as alternating depressions and projections, which, together, form gear teeth (e.g., gear tooth 1324a) of a rack. Actuator 1324 is enabled (by known structures not shown) to move longitudinally, in both directions. Thus, actuator 1324 and each key, such as key 1323, form a rack-and-pinion gear system, provided the lower portion 1323c has pinion-shaped cross-sections at such axial levels that the key can move axially through the inward-outward range required for its proper functioning while continuously engaging the actuator.

A skilled person will understand that many alternative schemes can be designed for transferring linear motion of a master element (such as actuator 1324) to rotational motion of one or more slave elements (such as keys 1321 to 1323). For example, it is anticipated that, for some types of keys, the actuator can be a sliding plate; the sliding plate can have a formed depression for receiving a complimentary projection on a slave key (or vice versa).

In like manner, actuator 1334 mechanically co-ordinates the rotation of keys 1331 to 1333, and actuator 1344 mechanically co-ordinates the rotation of keys 1341 to 1343. A further linkage (not shown) can optionally link actuators 1324, 1334, and 1344, thereby co-ordinating the rotation of all nine keys shown in Figure 13A. In the example shown, actuator 1334 is positioned so that keys 1331 to 1333 are in there respective neutral orientations. Meanwhile, independent actuators 1324 and 1344 have been slid upward and downward, respectively, thereby rotating their respective groups of keys counter-clockwise and clockwise, respectively (from the perspective of Figure 13A).

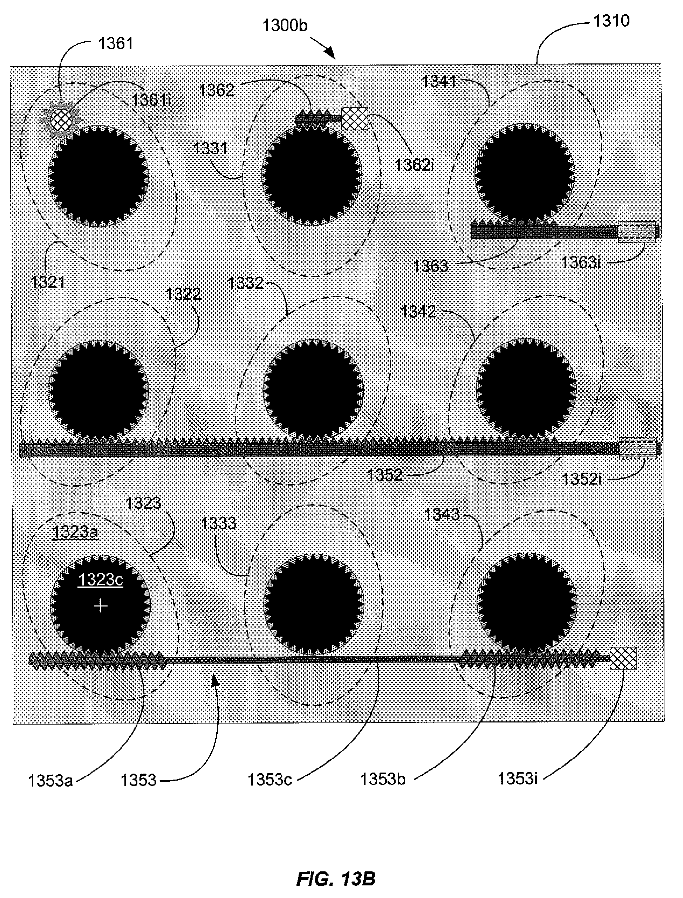

Each linked group of keys in Figure 13A forms a column of keys of keyboard 1300a. Clearly a group could be arranged as a row (as in Figure 13B) or any other arrangement. Of particular interest is the linking of keys within a row. For example, to transform any one of the key arrangements of Figures 2B to 2D into either of the other two key arrangements, ten column-grouping actuators would be needed, but fewer row-grouping actuators would be needed; since, in some transformations but not all, one half of a row rotates oppositely to the other half, six row-grouping actuators would be needed.

Now turning to Figure 13B, further variations of key actuators are described in reference to a portion of keyboard 1300b. Key guide 1310 and keys 1321, 1331, 1341, 1322, 1332, 1342, 1323, 1333, and 1343 are the same as in keyboard 1300a just described in reference to Figure 13A.

A skilled person will realize that pinions such as pinion 1323c can be caused to rotate by using a worm gear in place of a rack. Unlike a rack, a worm gear will remain linearly fixed, but its rotation about an axis substantially parallel to the plane defined by keyboard 1310 translates into rotation of each of one or more slave keys about a respective axis substantially perpendicular to the plane. Worm gear 1353 mechanically links keys 1323, 1333, and 1343, which are arranged in a common row, in contrast to the linked groups of Figure 13A, which are each arranged in a column.

Worm gear 1353 features portions 1353a and 1353b whose threads are oppositely inclined. This arrangement allows rotation of a single worm gear to rotate at least one key in a direction opposite to that of at least one other key. In this example, portion 1353c of worm gear 1353 illustrates that threads can be omitted to keep one or more keys, such as key 1333, fixed while other keys in the same row rotate. As one particular application of a worm gear to achieve opposite-direction rotations, key arrangement 210 of Figure 2A can be transformed into key arrangement 220 of Figure 2B by means of a single worm gear per row, provided the worm gear has two sections with oppositely inclined threads. Likewise, key arrangement 210 of Figure 2A can be transformed into key arrangement 320 of Figure 3B by means of a single worm gear per row, provided the worm gear has alternating sections with oppositely inclined threads.

Continuing in reference to Figure 13B, actuators can be impelled manually or electro-mechanically. Linear motion can be imparted to an actuator such as rack 1352 or a sliding plate (not shown) via some kind of user-operable impeller, for example a slide element (not shown). Rack 1352 can be impelled by a knob turning a small pinion (neither shown) in contact with the rack. Similarly, worm gear 1353 can be impelled by a user-operable knob. The impeller (slide element or knob) could be mounted on the exterior of device 100 to provide easy access, for frequent changes of key arrangement. Alternatively, the impeller could be in the interior of device 100, with removal of part of a housing of device 100 required for access to the impeller. However, such a configuration would only be suitable for infrequent changes of key arrangement.

Alternatives to purely mechanical impellers, manually controlled by a user of device 100, are electro-mechanical impellers, such as micro-motors and solenoids, controlled by microprocessor 110. In Figure 13B, micro-motor 1353i rotates worm gear 1353 about is axis of rotation. Solenoid 1352i impels rack 1352 (mechanically linking keys 1322, 1332, and 1342) linearly. Alternatively, a micro-motor can drive a small pinion (neither shown) to transfer rotational motion of the micro-motor to linear motion of rack 1352 (via the same teeth as shown in Figure 13B), which, in turn, translates its linear motion into rotational motion of its slave keys.

A skilled person will understand that the ratio of angular motion to linear motion in a linear-to-rotational motion-transfer system is dependent on the distance of the transfer interface from the axis of rotation. For instance, if a pinion depicted in Figures 13A and 13B were of smaller radius, it would rotate more for a given linear motion of its master actuator. In the case of transforming key arrangement 210 of Figure 2A into key arrangement 310 of Figure 3A, the effective radii of pinions should decrease as their distance from bilateral axis 310s of the key arrangement increases, so that, with a given linear motion of their master actuator, the rotation of pinions increases as their distance from that axis increases. If the radii decrease linearly in relation to distance from the bilateral axis, a linear actuator such as a rack or a worm gear can nevertheless engage all its slave pinions if the longitudinal axis of the actuator is appropriately tilted in relation to the longitudinal axis of the (half-) row it controls.

It is self-evident that any scheme for mechanically linking two or more keys has inherent limitations due to that very linkage: a fixed relationship between two keys militates against the flexibility to override that relationship. Therefore, for automated key rotation, complete flexibility in keyboard customization can only be achieved if each key has its own actuator, including an electro-mechanical impeller, such as a solenoid or micro-motor, controllable independently of any other actuator. Returning to Figure 13B, several mechanisms are illustrated for electro-mechanically rotating individual keys. For example, key 1341 is rotated by means of its own actuator, namely, rack 1363, which includes an impeller, namely, solenoid 1363i. Key 1331 is rotated by means of its own actuator, worm gear 1362, which includes an impeller, micro-motor 1362i. Finally, key 1361 is rotated by its own actuator, pinion 1361, which is integrated with micro-motor 1361i. In this last example, the actuator consists entirely of an electro-mechanical impeller suitably shaped to co-operate with its corresponding key, which, in each of these examples, has a shaft forming a pinion.

In practice, any scheme involving an electro-mechanical impeller will conventionally be controlled by microprocessor 110 executing computer-readable instructions, such as those of keyboard-arrangement program 122d. Automated arrangement of keyboard 160 can take many forms. The keyboard arrangement used at any given moment can be based on:which one of software applications 122 is running; which keyboard arrangement a user of device 100 has chosen; or a combination of these considerations (for instance, when a user-specified arrangement pre-empts an application-specified arrangement, or vice versa).

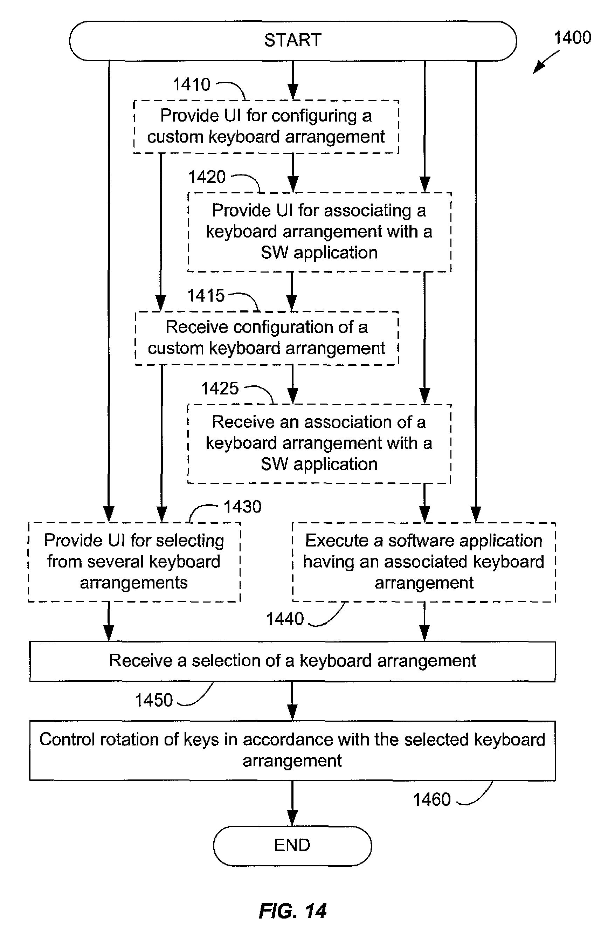

Specifically, in reference to Figure 14, a flowchart is shown depicting method 1400, by which keyboard-arrangement program 122d can, in various ways, arrange the keys of keyboard 160, provided they are rotatable and their rotation can be electro-mechanically controlled by microprocessor 110. Optional steps are shown in dashed outline. Microprocessor 110 receives, at step 1450, a selection of a keyboard arrangement. At step 1460, the microprocessor 110 sends signals to one or more impellers to impel respective actuators, thereby rotating keys of keyboard 160 in accordance with the selected keyboard arrangement.

The selection received at step 1450 can be received as user input from a user interface, provided at step 1430, for selecting from amongst several pre-determined keyboard arrangements. Alternatively, the selection can be received by a process running in the background (or as part of operating system 121) that determines which pre-determined keyboard arrangement is associated with whichever one of software applications 122 is currently being executed at step 1440 (and has user focus, if several are running).

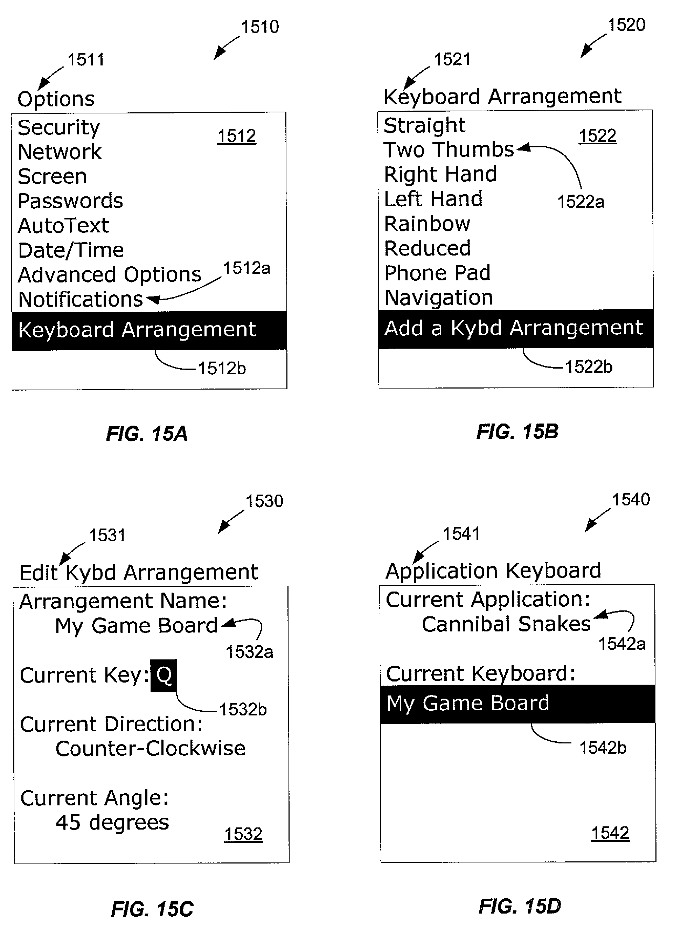

Figure 15B depicts an exemplary screen shot 1520 of an arrangement-selection UI as can be provided at step 1430. Heading 1521 indicates the purpose of menu 1522, which lists user-selectable menu items (such as menu item 1522a), which conventionally have mnemonic names to remind the user as to their purpose or design. For instance, the user could select from amongst keyboard arrangements such as "Straight" (Figure 2A), "Two Thumbs" (Figure 2B), "Right Hand" (Figure 2C), "Left Hand" (Figure 2D), "Rainbow" (Figure 3A), "Reduced" (Figure 3B), "Phone Pad" (Figure 3C), and "Navigation" (Figure 3D).

Although keyboard-arrangement program 122d could be launched by selecting from a list of all software applications available for a user of device 100 to invoke, it is more conventional to allow the keyboard-arrangement program to be invoked from an option- or profile-choosing application. Figure 15A depicts an exemplary screen shot 1510 of such an option-choosing application. Heading 1511 indicates the purpose of menu 1512, which lists user-selectable menu items, which conventionally have mnemonic names to remind the user as to their purpose. For example, menu item 1512a provides, as is conventional for a mobile communications device such as a smart phone, the option to select from amongst multiple notification profiles (e.g., "Vibrate", "Normal", "Quiet", "Phone Only", etc.) and, perhaps, to choose values of specific parameters associated with alerts (how many vibrations, which ring tone, how loud, etc.). Selection (by, for example, depressing trackball 150) of currently highlighted menu item 1512b provides, as per step 1430, keyboard-arrangement menu 1522 just discussed in reference to Figure 15B.

The pre-determined keyboard arrangements of menu 1522 can be provisioned, either before device 100 is sold to its eventual user or via a later software update downloaded or pushed to the device. Alternatively, a custom keyboard arrangement can be created via a UI provided at step 1410 in Figure 14. For example, selection of currently highlighted menu item 1522b ("Add a Kybd Arrangement") from menu 1522 provides, as per step 1410, a UI for creating and/or editing a keyboard arrangement. Figure 15C depicts an exemplary screen shot 1530 of such a UI. Heading 1531 indicates the purpose of UI 1532. A user-defined name ("My Game Board") has been entered in field 1532a. In the present example, a specific angle/direction of rotation can be specified for each individual key; the key currently being pre-configured is in field 1532b ("Q"), which happens to be the field currently having user focus (as is understood in the art). Receiving, at step 1415, a finalized configuration (or updating) of a custom keyboard arrangement - for example, by pressing a pre-determined key (possibly an "Escape" or "Return" key) or trackball 150 - conventionally causes a return to menu 1522, menu 1512, or a homepage; the substantive outcome is an updating of the UI functionality provided at step 1430.

If keyboard-arrangement program 122d associates a specific keyboard arrangement with software applications 122 that can be invoked by a user of device 100, associations can be defined for each such application. Alternatively, associations can be defined for only some such applications, with a default arrangement (possibly specified via the arrangement-selection UI provided at step 1430) being used for keyboard 160 when any other one of software applications 122 is running. In either case, such associations can be provisioned (as mentioned in respect of the arrangements themselves), or they can be created and/or edited via another UI provided at step 1420, Figure 15D depicts an exemplary screen shot 1540 of such a UI. Heading 1541 indicates that the purpose of UI 1542 is to define/edit an application-specific keyboard; in reality, more than one application could be associated with the same keyboard arrangement. In this example, the particular software application ("Cannibal Snakes") has already been entered in field 1542a, and the software application has already been associated with a previously configured keyboard arrangement ("My Game Board") - conventionally by selection from a list, to preclude typing errors - in field 1542b, which happens to be the field currently having user focus. Receiving, at step 1425, a finalized association will affect which keyboard selection is received at step 1450 when the software application in question is executed at step 1440.

In summary, it is anticipated that how microprocessor 110 directs keys to be oriented may be determined by: (a) whichever software application is running - for example, the phone application; (b) a user input - for example, selection of a "Left Hand" key arrangement, irrespective of what software application is running; or (c) a combination of a user input and which software application is running - for example, selection of the "Left Hand" key arrangement as the default key arrangement (to be used, for instance, when the email application is running, but not when the phone application is running).

It should be observed that any system that includes an actuator/impeller - whether for an individual key or a linked group of keys - will typically possess sufficient resistance to free rotation that the rotation-impeding schemes such as those illustrated in Figures 9A, 10A, and 11A are not needed.

It is further anticipated that a keyboard according to the present disclosure can either be integrated within device 100 or be a separate unit that can be attached to and detached from device 100. Each key of a detachable version of the disclosed keyboard would be depressible for making contact with and activating a corresponding key integrated within device 100.

Numerous variations of the key rotation schemes and mechanisms described above will be apparent to a skilled person as falling within the intent of this disclosure as claimed herebelow.

## Claims

1. A keyboard comprising:
a key guide; and
a plurality of keys, each retained laterally in said key guide and operable for providing input to a device when depressed by a switch-activation distance in a direction substantially perpendicular to a plane defined by said key guide;
wherein each key of said plurality of keys is rotatable about a respective axis of rotation substantially perpendicular to said plane.

2. The keyboard of claim 1, wherein said key guide and each key of said plurality of keys are co-operatively shaped for limiting rotation of that key to a predetermined range of orientations.

3. The keyboard of claim 1, wherein said key guide and each key of said plurality of keys are co-operatively shaped for impeding rotation of that key from a predetermined orientation;
optionally wherein rotation of each key of said plurality of keys from said predetermined orientation requires at least one of:
application of a predetermined torque to that key about its respective axis of rotation; and depression of that key by a release distance,
wherein said release distance is greater than said activation distance;
and
further optionally wherein each key of said plurality of keys includes one of a respective projection and a respective depression; and wherein said key guide includes, for that key, one of, respectively, a corresponding depression for receiving the respective projection when that key is in the predetermined orientation and a corresponding projection for reception by the respective depression when that key is in the predetermined orientation.

4. The keyboard of claim 1, wherein each key of said plurality of keys is shaped for receiving a complementary tool for applying torque to that key about its respective axis of rotation.

5. The keyboard of claim 4,
wherein each key of said plurality of keys is shaped so that a periphery of an upper portion of that key is shaped for matingly receiving the tool about at least part of said periphery; or
wherein each key of said plurality of keys is shaped so that an upper portion of that key forms a depression for receiving the tool within said depression.

6. The keyboard of claim 1, further comprising an actuator located beneath said key guide and in communication with at least one key of said plurality of keys, wherein motion of said actuator causes rotation of each key of said at least one key.

7. The keyboard of claim 6, wherein said at least one key comprises at least two keys arranged in one of a row and a column.

8. The keyboard of claim 6, wherein said actuator is capable of lateral movement;
optionally wherein said actuator comprises an elongate member; wherein each key of said at least one key includes one of a respective projection and a respective depression; and wherein said elongate member includes, for that key, one of, respectively, a corresponding depression for receiving the respective projection and a corresponding projection for reception by the respective depression; and
further optionally wherein said elongate member comprises a rack, and wherein each key of said at least one key includes a pinion engaging said rack.

9. The keyboard of claim 6, wherein said actuator comprises a worm gear capable of rotation, and wherein each key of said at least one key includes a respective projection received by said worm gear;
optionally wherein said worm gear comprises two portions having oppositely inclined threads, whereby motion of said worm gear rotates two keys of said at least one key in opposite rotational directions.

10. The keyboard of claim 6, wherein said actuator is operable to simultaneously rotate two keys of said at least one key through angles of different, respective magnitudes;
optionally wherein said respective magnitudes increase in relation to respective distances of said two keys from a bilateral axis of the keyboard.

11. The keyboard of claim 6, wherein motion of said actuator is manually controllable.

12. The keyboard of claim 6, wherein said actuator includes an electro-mechanical impeller;
optionally wherein said impeller comprises one of a micro-motor and a solenoid.

13. The keyboard of claim 6, wherein said actuator includes an electro-mechanical impeller; wherein said impeller is controllable by a microprocessor of the device executing computer-readable instructions; and
optionally wherein control of said impeller by the microprocessor is based on at least one of a software application running on the device and a user input received at the device.

14. The keyboard of claim 1,
wherein an upper portion of each key of said plurality of keys has a generally oblong shape; or
wherein the keyboard is detachable from the device; and wherein each key of said plurality of keys, when depressed, depresses a respective key of an integrated keyboard of the device.

15. A handheld electronic device comprising:
a microprocessor;
a keyboard in electro-mechanical communication with said microprocessor, said keyboard including
a key guide; and
a plurality of keys, each retained laterally in said key guide and operable for providing input to the device when depressed by a switch-activation distance in a direction substantially perpendicular to a plane defined by said key guide;
wherein each key of said plurality of keys is rotatable about a respective axis of rotation substantially perpendicular to said plane.

16. The device of claim 15, wherein rotation of each key of said plurality of keys is controlled by said microprocessor based on at least one of a software application running on the device and a user input received at the device.

17. A method of arranging a keyboard of a handheld electronic device, the device including a microprocessor and a keyboard in electro-mechanical communication with the microprocessor, the keyboard including a plurality of keys, each key of said plurality of keys being rotatable under control of the microprocessor, the method comprising:
receiving a selection of one of a plurality of keyboard arrangements; and
controlling rotation of the plurality of keys, in accordance with said selected keyboard arrangement.

18. The method of claim 17,
wherein said selection is based on at least one of a software application running on the device and a user input received at the device; or
further comprising providing a user interface enabling selection from amongst said plurality of keyboard arrangements.

19. The method of claim 17,
further comprising:
providing a user interface enabling configuration of a custom keyboard arrangement of said plurality of keyboard arrangements; and
receiving, via said user interface, a configuration of said custom keyboard arrangement;
or further comprising:
providing a user interface enabling association of a software application with a custom keyboard arrangement of said plurality of keyboard arrangements; and
receiving, via said user interface, an association of said software application with said custom keyboard arrangement.

## Amended claims

### Amended claims in accordance with Rule 137(2) EPC.

**1.** A keyboard (160) comprising:
a key guide (410); and
a plurality of keys (451-453), each retained laterally in said key guide (410) and operable for providing input to a device (100) when depressed by a switch-activation distance in a direction substantially perpendicular to a plane defined by said key guide (410);
wherein each key (452) of said plurality of keys (451-453), is rotatable about a respective axis of rotation (452r) substantially perpendicular to said plane.

**2.** The keyboard (160) of claim 1, wherein said key guide (910) and each key (952) of said plurality of keys (951-953), are cooperatively shaped for limiting rotation of that key (952) to a predetermined range of orientations.

**3.** The keyboard (160) of claim 1, wherein said key guide (1010) and each key (1051) of said plurality of keys (1051-1053), are cooperatively shaped for impeding rotation of that key (1052) from a predetermined orientation;
optionally wherein rotation of each key (452) of said plurality of keys (451-453), from said predetermined orientation requires at least one of: application of a predetermined torque to that key (452) about its respective axis of rotation (452r); and depression of that key (452) by a release distance, wherein said release distance is greater than said activation distance; and
further optionally wherein each key (1120) of said plurality of keys (451-453), includes one of a respective projection (1124) and a respective depression; and wherein said key guide (410) includes, for that key, one of, respectively, a corresponding depression (1125a, 1125b) for receiving the respective projection (1124) when that key is in the predetermined orientation and a corresponding projection for reception by the respective depression when that key is in the predetermined orientation.

**4.** The keyboard (160) of claim 1, wherein each key (1220) of said plurality of keys (551-553), is shaped (1221a, 1221b) for receiving a complementary tool for applying torque to that key (1220) about its respective axis of rotation (452r).

**5.** The keyboard (160) of claim 4,
wherein each key (1210) of said plurality of keys (551-553), is shaped so that a periphery of an upper portion of that key is shaped for matingly receiving the tool about at least part of said periphery; or
wherein each key of said plurality of keys is shaped so that an upper portion of that key forms a depression (1221a) for receiving the tool within said depression (1221a).

**6.** The keyboard (160) of claim 1, further comprising an actuator (1324, 1334, 1344) located beneath said key guide (1310) and in communication with at least one key of said plurality of keys (1321-1323), wherein motion of said actuator (1324, 1334, 1344) causes rotation of each key of said at least one key.

**7.** The keyboard (160) of claim 6, wherein said at least one key comprises at least two keys (1321-1323) arranged in one of a row and a column.

**8.** The keyboard (160) of claim 6, wherein said actuator (1324, 1334, 1344) is capable of lateral movement;
optionally wherein said actuator (1324, 1334, 1344) comprises an elongate member; wherein each key (1324) of said at least one key includes one of a respective projection (1324a) and a respective depression; and wherein said elongate member includes, for that key, one of, respectively, a corresponding depression for receiving the respective projection and a corresponding projection for reception by the respective depression; and
further optionally wherein said elongate member comprises a rack (1352), and wherein each key of said at least one key includes a pinion engaging said rack.

**9.** The keyboard (160) of claim 6, wherein said actuator (1353) comprises a worm gear (1353) capable of rotation, and wherein each key (1323) of said at least one key includes a respective projection received by said worm gear;
optionally wherein said worm gear (1353) comprises two portions (1353a, 1353b) having oppositely inclined threads, whereby motion of said worm gear (1353) rotates two keys of said at least one key in opposite rotational directions.

**10.** The keyboard (160) of claim 6, wherein said actuator (1352) is operable to simultaneously rotate two keys of said at least one key through angles of different, respective magnitudes;
optionally wherein said respective magnitudes increase in relation to respective distances of said two keys from a bilateral axis of the keyboard (160).

**11.** The keyboard (160) of claim 6, wherein motion of said actuator ( is manually controllable.

**12.** The keyboard (160) of claim 6, wherein said actuator includes an electro-mechanical impeller;
optionally wherein said impeller comprises one of a micromotor (1362i) and a solenoid (1352i).

**13.** The keyboard (160) of claim 6, wherein said actuator includes an electro-mechanical impeller; wherein said impeller is controllable by a microprocessor of the device (100) executing computer-readable instructions; and
optionally wherein control of said impeller by the microprocessor (110) is based on at least one of a software application running on the device (100) and a user input received at the device (100).

**14.** The keyboard (160) of claim 1,
wherein an upper portion of each key of said plurality of keys has a generally oblong shape; or
wherein the keyboard (160) is detachable from the device (100); and wherein each key of said plurality of keys (, when depressed, depresses a respective key of an integrated keyboard (160) of the device (100).

**15.** A handheld electronic device (100) comprising:
a microprocessor (110);
a keyboard (160) in electro-mechanical communication with said microprocessor (110), said keyboard (160) including
a key guide (410); and
a plurality of keys (110), each retained laterally in said key guide (410) and operable for providing input to the device (100) when depressed by a switch-activation distance in a direction substantially perpendicular to a
plane defined by said key guide (410);
wherein each key (452) of said plurality of keys (451-453) is rotatable about a respective axis of rotation (452r) substantially perpendicular to said plane.

**16.** The device (100) of claim 15, wherein rotation of each key of said plurality of keys (451-453) is controlled by said microprocessor (110) based on at least one of a software application (1542a) running on the device (100) and a user input received at the device (100).

**17.** A method of arranging a keyboard (160) of a handheld electronic device (100), the device (100) including a microprocessor (110) and a keyboard (160) in electro-mechanical communication with the microprocessor (110), the keyboard (160) including a plurality of keys (451-453), each key of said plurality of keys (451-453) being rotatable under control of the microprocessor (110), the method comprising:
receiving (1540) a selection of one of a plurality of keyboard arrangements (1522a); and
controlling (1460) rotation of the plurality of keys (451-453), in accordance with said selected keyboard arrangement (1522a).

**18.** The method of claim 17,
wherein said selection is based on at least one of a software application running on the device (100) and a user input received at the device (100); or
further comprising providing a user interface (1522) enabling selection from amongst said plurality of keyboard arrangements (1522a).

**19.** The method of claim 17, further comprising:
providing a user interface (1532) enabling configuration of a custom keyboard arrangement (340, 1532a) of said plurality of keyboard arrangements (310, 320, 330, 340); and
receiving, via said user interface (1532), a configuration of
said custom keyboard arrangement (340);
or further comprising:
providing a user interface enabling association of a software application (1542a) a custom keyboard arrangement (340, 1542b) of said plurality of keyboard arrangements (310, 320, 330, 340); and
receiving, via said user interface, an association of said software application with said custom keyboard arrangement (340).
